# EUROPEAN PATENT APPLICATION

(11) **EP 4 498 146 A1**
(43) Date of publication of application: **29.01.2025**
(21) Application number: 24151263.1
(22) Date of filing: 10.01.2024
(51) Int. Cl.: G02B 27/00, G02B 27/01, G06T 19/00, G09B 5/02, G09B 5/06, G09B 5/08, G09B 19/00, G06F 3/01, G06F 3/14, G06V 10/764, G06V 20/20

(54) **SYSTEMS AND METHODS FOR TRAINING SESSION REPLAY WITH DIGITAL TWINNING AND BIOMETRIC ANALYSIS**

(30) Priority: 27.07.2023 US 202318360410
(71) Applicant: EXO Insights Corp., Waterloo, Ontario N2L 6R5 (CA)
(72) Inventor: TEBBS, Jesse, Waterloo, N2L 6R5 (CA); MUNIZ SIMAS, Fernando, Waterloo, N2L 6R5 (CA)
(74) Representative: Humphrey-Evans, Edward John

(57) **Abstract**

Systems and methods for capturing a training environment, processing a recorded training session and generating a 3D virtual replay of a training session is provided. The system includes a server for generating a virtual twin of the training environment captured by a scanner device. The server further processes data, from a plurality of biometric hardware sensors worn by a trainee as they perform activities in the training environment, to extract psychophysiometric indicators of the trainee's behavior/response. The gaze direction, position and body movement of the trainee is also recorded by motion capture sensors during the training session. The server is further configured to generate a post-training session replay of a bio twin (virtual twin) of the trainee in the virtual environment, and synchronize the replay with the biometric sensor data and extracted insights and indicators of behavior/response of the trainee in the training environment.

## Description

### Technical Field

The embodiments disclosed herein relate to tracking and scoring trainees performance of training activities, and, in particular to systems and methods for three-dimensional training session replay synchronized with psychophysiological indicators of trainee performance.

### Introduction

Virtual reality (VR) or mixed reality (MR) is used for training in a number of industries. However, in some cases, virtual reality environments cannot sufficiently simulate real-world stimuli/conditions/variables to perform meaningful training. In other cases, VR/MR training techniques which require the trainee(s) to wear a head mounted display are unpractical when training a team of individuals to perform coordinated real-world activities in a relatively large or complex environment.

Analysis of biometric and psychometric data collected from trainees performing training activities can be useful to gain insight into personal characteristics and the mindset of the trainee performing the training. Such data can be analyzed to provide insights such as the stress level, attentiveness, engagement and level of understanding/learning, etc. of the trainee when performing training activities. Such data can also be useful to identify personality traits desirable for a particular job or role and for analyzing group dynamics. Typically, the output of biometric data analysis is a score or value for biometric indicators of a trainee's overall performance during the training session.

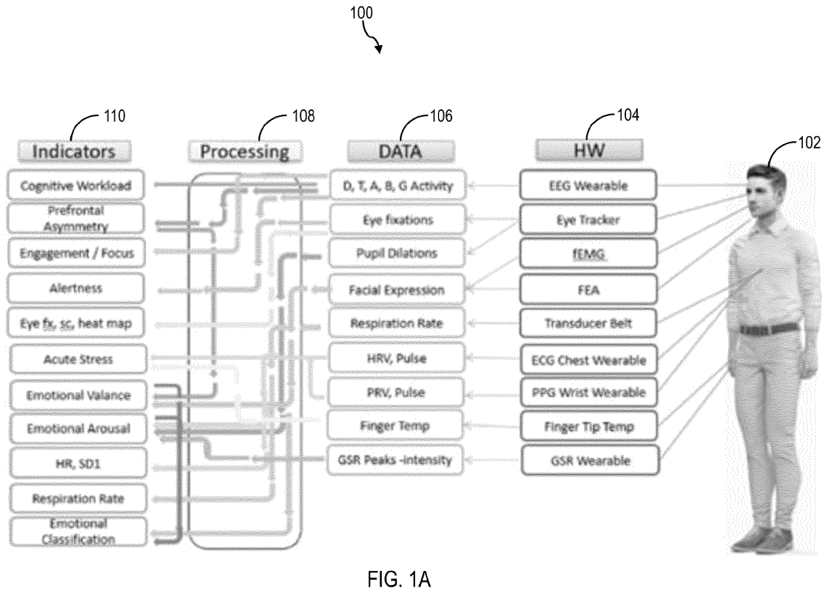

Referring to FIG. 1A, shown therein is a diagram of biometric data collection 100. A person 102 is attached with wearable biometric hardware sensors 104 on various part of the body to record biometric responses of the person 102 while performing various activities. The biometric hardware sensors 104 may include sensors for performing electroencephalography (EEG), electrocardiogram (ECG), eye tracking, a facial electromyogram (fEMG), tracking respiration, photoplethysmography (PPG), body temperature measurement, galvanic skin response (GSR) and facial expression analysis (FEA).

There are a number of commercially available third-party biometric hardware 104 for recording a plurality of biometric measurement data 106. Examples include: Polar^{®} H10 ECG sensor, AdHawk eye tracking glasses, Pupil Labs eye tracking glasses, Hexoskin^{®} Health Sensors vest, Go Direct^{®} respiration belt and Blue Maestro body temperature sensors. The measurement data 106 recorded by the biometric hardware 104 depends on the biometric hardware 104 and the biometric property it records or measures. For example, eye tracking biometric hardware 104 may record eye fixation and/or pupil dilation; a transducer belt measures respiration rate; an EEG electrode records electrical activity in the brain, etc.

A difficulty in biometric data analysis, is the processing 108 that is required to extract insights and indicators 110 of human behavior/response from the different data 106 recorded by the various biometric hardware 104. In some cases, the processing 108 is relatively straightforward when the measured data 106 is directly linked to an indicator 110 of human behavior/response. For example, an EEG provides a direct measurement of cognitive workload.

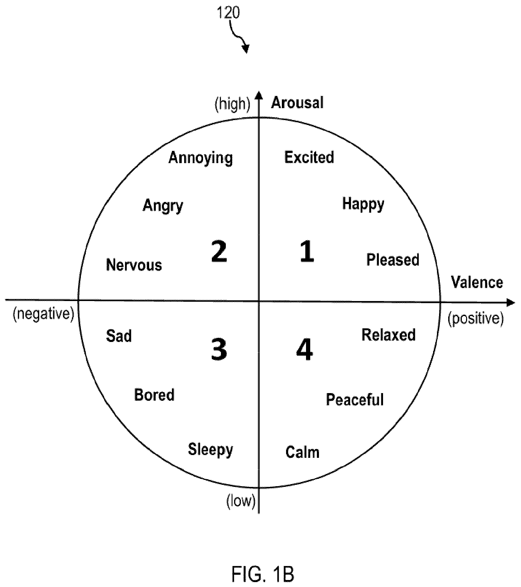

In other cases, complex processing 108 is required to extract the indicator 110 from a plurality of measurement data 106 received from different types of biometric hardware 104. For example, emotional valence and emotional arousal are typically modelled on a 2-dimensional plot. An exemplary emotional valence-arousal plot 120 is shown in FIG. 1B. Data points in the plot 120 may be determined from analysis of a plurality of biometric measurement data 106 from a plurality of biometric hardware 104. Such analysis typically takes time to perform, so there is a delay between performance of training activities, processing the biometric measurement data and extracting indicators 110 of the trainee performance of the training activities.

A further difficulty in biometric data analysis is how to track biometric data during training activities to associate a biometric change or response by the trainee to a specific event or stimulus in the training environment. As noted above, there is typically a delay between the training, when the data collection occurs, and the data analysis, thus associating a particular biometric response to a particular training event/stimulus is difficult. Furthermore, a given piece of biometric hardware 104 may require specific software for operation and this limits interoperability with other biometric hardware 104 and data processing 108.

Accordingly, there is a need for new systems and methods for capturing a training session, processing biometric data recorded during the training session to generate a replay of the training session with near real-time biometric analysis.

### Summary

According to an embodiment, there is a system for capturing a training session, processing biometric, motion capture and video data recorded during the training session and generating a 3D virtual replay of the training session synchronized with biometric analysis. The system includes a scanner device for capturing a three-dimensional view of a training environment to generate a virtual mesh of the training environment.

The system includes a replay server configured to generate a virtual twin of the training environment. The server is configured to host an application for editing, smoothing and stitching the virtual mesh captured by the scanner to create a seamless 3D representation of the entire training environment. The server is configured to host an application for assigning identifiers to objects in the virtual environment including areas of interest.

The server is further configured to process data from a plurality of biometric hardware sensors worn by a trainee as they perform activities in the training environment, to extract psychophysiometric indicators of the trainee's behavior/response. The server is configured to process the visual behavior, position and movement of the trainee as recorded by motion capture sensors, to generate a bio twin (virtual twin) of the trainee.

The server is further configured to generate a post-training session replay of the bio twin in the virtual environment and synchronize the replay with the biometic sensor data and extracted insights and indicators of the trainee in the training environment.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
FIG. 1A is a diagram of biometric data collection;
FIG. 1B is an exemplary emotional valence-arousal plot;
FIG. 2A is diagram of a system for training session replay, according to an embodiment;
FIG. 2B is a diagram of the replay server of FIG. 2A;
FIG. 3A is an exemplary user interface of a live action console application, according to an embodiment;
FIG. 3B is an exemplary user interface of a session replay console application, according to an embodiment;
FIG. 3C is an exemplary user interface of a session replay console application, according to another embodiment;
FIG. 4A is an exemplary user interface of a mesh editor application, according to an embodiment;
FIG. 4B is an exemplary user interface of a virtual twin editor application, according to an embodiment; and
FIG. 4C is an exemplary user interface showing a virtual twin of a training environment, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems and methods described herein may be implemented in computer programs/applications executing on programmable computers, each computer comprising at least one processor, a data storage system (including volatile and nonvolatile memory and/or storage elements), at least one input device, and at least one output device. For example, and without limitation, the programmable computer may be a programmable logic unit, a mainframe computer, a server, a personal computer, a cloud-based program or system, a laptop, a personal data assistance, a smartphone, or a tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

Each program comprises plurality of instructions that are executable by a processor. In this respect, the term "executable" means a program file that is in a form that can ultimately be run by the processor. Examples of executable programs may be, for example, a compiled program that can be translated into machine code in a format that can be loaded into a random access portion of the memory and run by the processor, source code that may be expressed in proper format such as object code that is capable of being loaded into a random access portion of the memory and executed by the processor, or source code that may be interpreted by another executable program to generate instructions in a random access portion of the memory to be executed by the processor, etc.

A description of an embodiment with several components in communication with each other does not imply that all such components are required. On the contrary a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

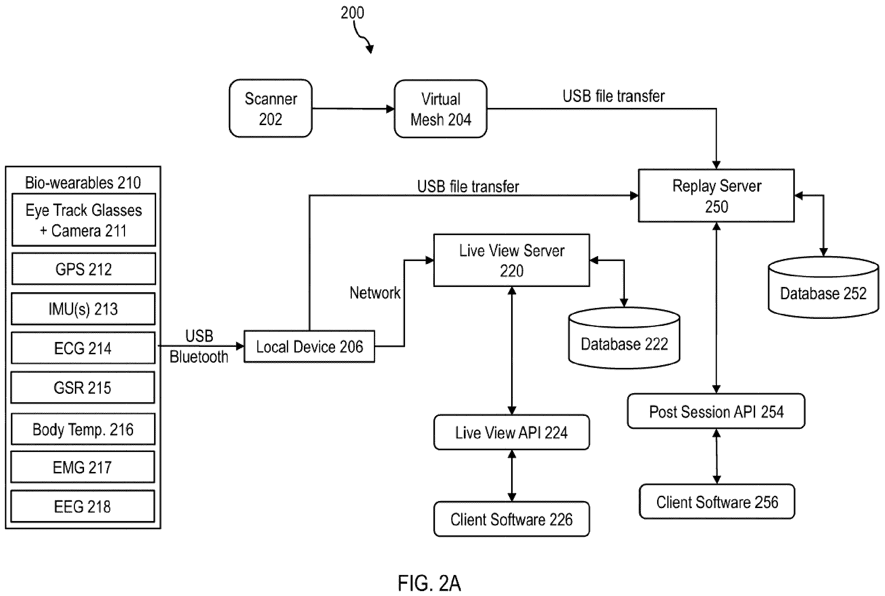

Referring to FIG. 2A, shown therein is a diagram of a system 200 for training session replay. The system 200 is used for capturing a training session, processing biometric data and video data recorded during the training session and generating a 3D virtual replay of the training session synchronized with near real-time biometric analysis.

The system 200 includes a scanner device 202 for capturing a three-dimensional view of a real-world training environment. The training environment may be an indoor or outdoor space up to 50000 cubic meters in size. The scanner 202 may be moved between locations within the training environment to accurately capture the entirety of the training environment. According to other embodiments, the system 200 may include a plurality of scanner devices 202 positioned at different locations for capturing the training environment. The scanner device 202 may be a commercially available scanner device, for example an Android^{®} OS or IOS smartphone or tablet device having one or more cameras and installed with a 3D scanning application.

The scanner device 202 is configured to capture a 3D view of the training environment to generate a virtual mesh 204 of the training environment. The virtual mesh 204 may comprise points in space, polygons, vectors, or the like, to represent objects and boundaries in the training environment. The virtual mesh 204 is generated and stored on the scanner device 202. Typically, the virtual mesh 204 of the training environment is generated prior to using the training environment for training.

The system 200 includes a plurality of wearable biometric hardware "bio-wearables" 210. The bio-wearables 210 are attached to a trainee's body to measure various biometrics of the trainee during performance of training activities. The bio-wearables are commercially available biometric hardware or sensors having a USB interface and/or Bluetooth connectivity for transmitting sensor readings.

The bio-wearables 210 includes an eye track glasses/camera 211. The eye tracking glasses 211 are worn by a trainee to track the eye position of the trainee while performing training activities. The eye track glasses/camera 211 includes a camera to capture a view of the training environment from the perspective of the trainee (i.e., a first-person perspective) as they move around the training environment. According to other embodiments, the system 200 may include a separate body- or head-worn camera for capturing a view of the training environment from the first-person perspective of the trainee. The eye track glasses/camera 211 may further include a microphone for capturing audio from the trainee and the training environment. According to some embodiments, the system 200 may further include body- or head-worn microphones for capturing the ambient noise or sounds in the training environment from the first-person perspective of the trainee.

The bio-wearables 210 include a global positioning system (GPS) tracker 212 for tracking the position of the trainee within the training environment. The bio-wearables 210 include inertial measurement units (IMUs) 213 attached to various parts of the trainee, preferably the trainee's limbs, for motion capture to record the motion and movement of the trainee's body when performing training activities. According to some embodiments, motion capture of the trainee is accomplished by a mix of GPS tracking and state estimation sensors including one or more IMU, LIDAR and UW (ultra-wideband) sensors attached to the trainee. According to other embodiments, the trainee wears a full-body motion capture system having a suite of IMUs.

The bio-wearables 210 include an ECG bio-wearable 214 (a heart rate monitor), for measuring heart rate, heart rate variability and heart acute stress response of the trainee. The bio-wearables 210 a GSR bio-wearable 215, for measuring changes in the electrical conductance of the trainee's skin, as a measure of emotion and/or stress response.

The bio-wearables 210 include a body temperature thermometer 216 for measuring the body temperature of the trainee. The bio-wearables 210 include an EMG bio-wearable 217 for measuring muscle electrical activity of the trainee. The bio-wearables 210 include an EEG bio-wearable 218 for measuring the brain activity of the trainee. According to other embodiments, the bio-wearables 210 may include other biometric hardware for measuring other biometrics.

The system 200 includes a local device 206 for receiving and storing, or relaying, the biometric data from the bio-wearables 210 including the view captured by the eye track glasses/camera 211. The local device 206 is carried by the trainee while performing training activities in the training environment. The local device 206 is preferably an Android OS smartphone or tablet device having a USB interface and/or Bluetooth connectivity for wide compatibility with the plurality of bio-wearables 210. The local device 206 further includes a display and an input device (e.g., a touchscreen).

The local device 206 is installed with a sensor data manager application for configuring the bio-wearables 210 settings and recording the biometric data from the bio-wearables 210. For example, the ECG bio-wearable 214 senses the wearer's heart rate, heart rate variability and heart acute stress response which is transmitted via Bluetooth connection to the local device 206 for storage. The data manager application may be configured for user data field input. The local device 206 is further installed with a video capture application for configuring the eye track glasses/camera 211 and recording and/or relaying the view from the camera 211.

The system 200 includes a live view server 220 connected to the local device 206 over a wireless communications network. The live view server 220 is configured to receive, process and store the measurements from the bio-wearables 210 and the camera view relayed from the local device 206 in a database 222. The live view server 220 is further configured to host a live action console application for presenting the live view from the eye track glasses/camera 211 synchronized with near real-time biometric data output from the bio-wearables 210 as the trainee performs training activities.

The system 200 includes client software 226 running on a client device for connecting to the live view server 220 and/or the database 222 via a live view application programming interface (API) 224. The client software 226, mirrors the live action console application hosted by the live view server 220, on the client device, allowing a user of the client device to view the live first-person perspective from the camera 211 and the near real-time biometric data output from the bio-wearables 210 as the trainee performs training activities.

The system 200 includes a replay server 250. The replay server 250 is configured to host a session replay console application for presenting post training session replay as described below. The replay server 250 is further configured to automatically analyze the biometric data from the bio-wearables 210 to extract and display psychophysiometric insights and indicators of human behavior/response temporally synchronized with the post session replay.

To create the post session replay, the virtual mesh 204 created by the scanner device 202 is received at the replay server 250 by USB or network/intenertfile transfer from the scanner device 202. The biometric data from the bio-wearables 210 and the camera view from the camera 211 are similarly retrieved, post training session, by USB file transfer from the local device 206.

The post session replay, the biometric insights and indicators output by the post session server 250 are stored in a database 252. To view the post session replay, insights and indicators, a user (i.e., a trainer) using the client software 256 running on a client device connects to the replay server 250 and/or the database 252 via a post session API 254. The client software 256 mirrors the session replay console application hosted by the replay server 250, on the client device, allowing a user of the client device to view the session replay and the biometric insights and indicators as the trainee performs training activities.

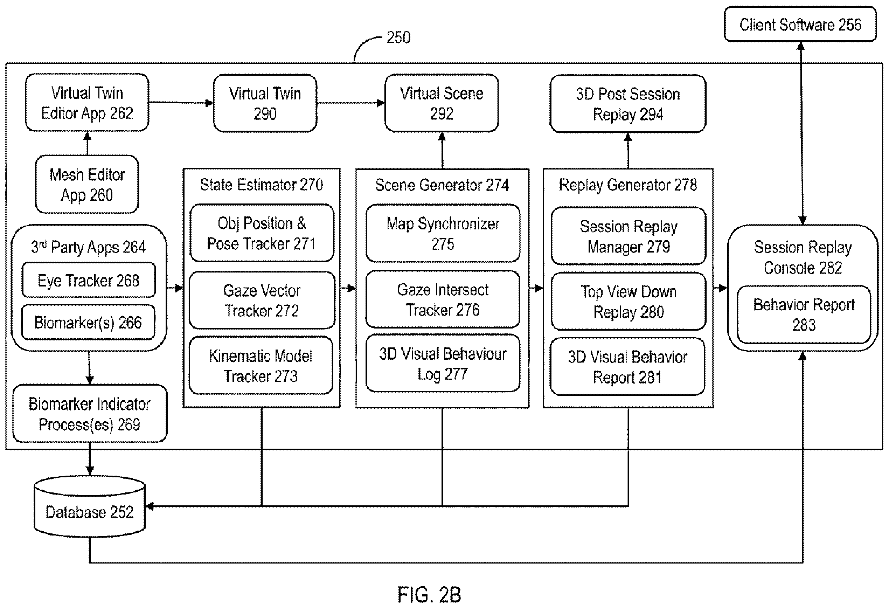

Referring to FIG. 2B, shown therein is a diagram of the components of the replay server 250. Generally, the replay server 250 hosts a plurality of applications 260, 262, 264, 282 and software modules 269, 270, 274, 278 executable by one or more processors of the replay server 250. Outputs 273, 277, 281, 290, 292, 294 generated by the replay server 250 are stored in the database 252 and/or sent to a session replay console application 282.

The replay server 250 hosts a mesh editor application 260.The mesh editor 260 receives the virtual mesh 204 from the scanner device 202. As described above, the scanner device 202 may be moved around the training environment to capture various views of the environment to create the virtual mesh 204. There may be incongruities between the various views captured by the scanner device 202 or there may be gaps between multiple scanned rooms.

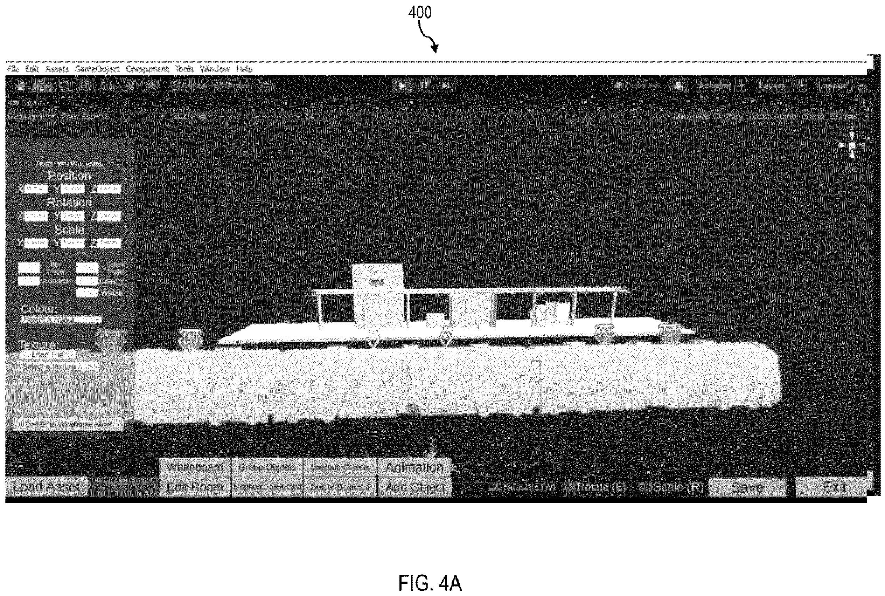

The mesh editor 260 is configured to edit, smooth, segment and stitch the virtual mesh 204 from the scanner device 202 to create a seamless (i.e., continuous, without gaps) mesh representation of the entire training environment. FIG. 4A shows an exemplary user interface 400 of the mesh editor application 260 showing a virtual mesh of a training environment (an indoor office space) as captured by the scanner device 202. According to other embodiments, a third-party scanning and mesh editor tool, e.g., Matterport^{™} may be used in place of the mesh editor 260.

Referring back to FIG. 2B, the replay server 250 hosts a virtual twin editor app 262. The virtual twin editor 262 is configured to generate a virtual twin 290 of the training environment from the virtual mesh 204 by assigning identifiers to objects in the virtual mesh 204 and labelling objects or sections of the virtual mesh 204 as areas of interest (AOIs). Objects may be labelled as static or dynamic. Static objects are generally immobile objects in the training environment (e.g., buildings, trees, etc.). Dynamic objects are objects paired to a position coordinate that is tracked and can change dynamically (e.g., vehicles, people). Prior to the training session, dynamic objects are attached with state estimation sensors (e.g., IMUs) to record the position coordinates and movement of the dynamic object in the training environment. Objects are automatically set as dynamic when they have associated state estimation data.

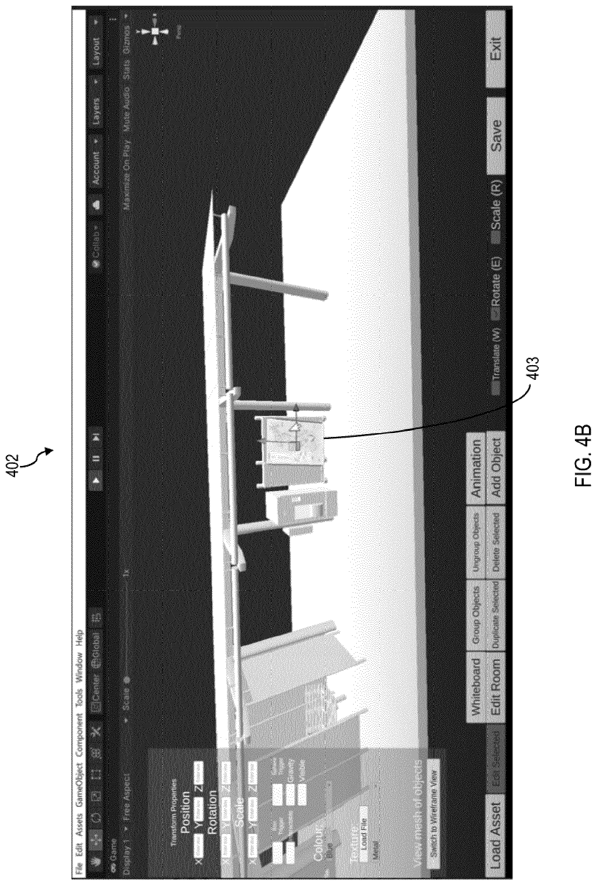

FIG. 4B shows an exemplary user interface 402 of the virtual twin editor application 262. An AOI (e.g., a static object) 403 to track visual interest against is labelled.

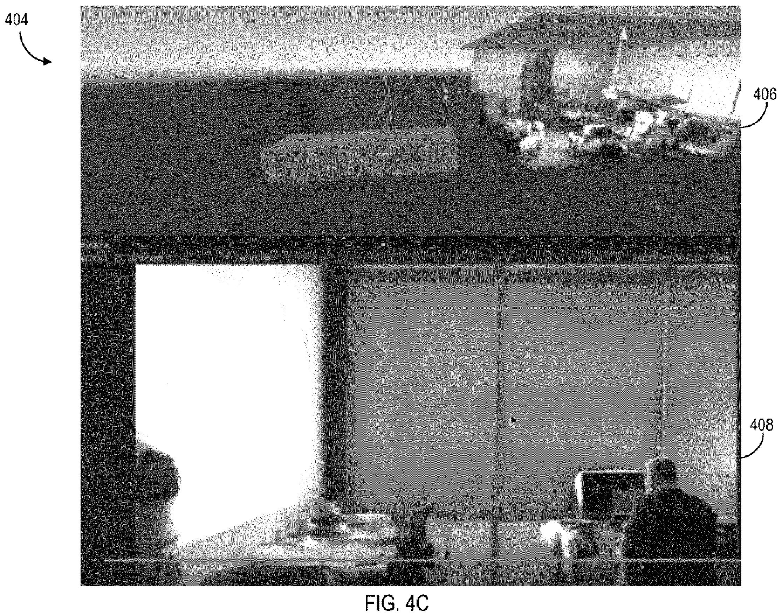

The virtual twin editor 262 is further configured to rescale objects along any axis. The virtual twin editor 262 is further configured to generate the virtual twin 290 of the training environment as a CAD file. FIG. 4C is an exemplary user interface 404 showing a virtual twin 406 of the real-world training environment 408.

Referring again to FIG. 2B, the replay server 250 is installed with third-party applications 264. The third-party apps 264 are provided by biometric hardware manufactures for integrating bio-wearables into larger systems and processing the biometric data recorded or measured by the bio-wearables 210.

The third-party apps 264 include an eye tracker application 268. The eye tracker app 268 is configured to process the biometric data measured by eye tracking glasses 210 to generate two-dimensional eye tracking videos, visual behavior data (e.g., fixations, saccades) and gaze vector data. The outputs of the eye tracker app 268 are further processed by the replay server 250 to generate a "bio twin" (i.e., a virtual twin of the trainee) in the post session replay. That is, the replay server 250 copies or "twins" gaze vector data of the trainee from the training exercise such that a user (i.e., a trainer) can see the gaze vector data as a 3D object in the virtual twin 290 of the environment during the post session replay.

Visual behavior data and gaze vector data output by the eye tracker app 268 are processed by a state estimator module 270. The state estimator module 270 includes an object and pose tracker subunit 271. The object and pose tracker 217 is configured to estimate the pose and position of objects in the training environment. The object and pose tracker 217 may implement machine learning or artificial intelligence trained to estimate the pose and position of different object types/classes. The virtual twin 290 of the training environment is set to the position and pose of the real environment (i.e., at the same latitude and longitude in the same orientation). The position and pose of dynamic objects in the scene are recorded temporally and a virtual twin of the dynamic object is shown which moves in position and rotation as was done in the real training environment. Sensor data fusion from different state estimation sensors is done to collect the position and rotation of each object. Sensor real position estimation is compared to virtual twin position estimation. A set of high confidence spatial anchors are set and position and pose of objects are measured relative to the anchors.

The state estimator module 270 includes a gaze vector tracker subunit 272. The gaze vector tracker 272 is configured to process the two-dimensional eye tracking videos, the visual behavior data and the gaze vector data output by the eye tracker app 268 to estimate the head pose and head position of the bio twin of the trainee in the training session replay.

The state estimator module 270 includes a kinematic model tacker subunit 273. The kinematic model tracker 270 is configured to process the data from state estimation sensors (e.g., motion tracking sensors) attached to the trainee to estimate the body position of the bio twin of the trainee in the training session replay.

The replay server 250 includes a scene generator module 274. The scene generator module 274 processes the outputs of the state estimator module 270 to generate a virtual scene 292 including the virtual twin 290 of the training environment and the bio twin of the trainee.

The scene generator module 274 includes a map synchronizer subunit 275. The map synchronizer 275 is configured to temporally synchronize the position of objects in the virtual twin 290 of the training environment with the gaze vector tracker 272 output and the view recorded by the camera 211 to generate a virtual scene 292 of the training session. A virtual scene 292 is created for each video frame in the recorded training session. Generally, the virtual scene 292 shows a first-person view of the training environment from the perspective of the trainee (i.e., the perspective of the camera attached to the trainee). Where there are multiple trainees participating in the training session, the recorded data from each trainee is aggregated into the scene to enable a first-person view of the training environment from the perspective of each trainee. The virtual scenes 292 that are generated are stored in the database 252.

The map synchronizer subunit 275 is further configured to process the positional and rotational data of dynamic objects received from state estimator module 270 to smooth the trajectory of dynamic objects in the virtual scene 292. The map synchronized subunit further scales the virtual twin 290 of the environment to the same scale and size as the real training environment via manual measurement of 3 fixed points or spatial anchors or by placement of positioning sensors.

During the training session replay, the movement and actions of the bio twin of the trainee is synchronized to the movements and actions made by the trainee during the training session. This provides for a training session replay that is temporally synchronized to the actual training session as described below.

The scene generator module 274 includes a gaze intersect tracker subunit 276. The gaze intersect tracker 276 is configured to determine where a gaze vector of the trainee intersects with certain AOIs or regions of interest in the training environment and log the intersection. Tracking the gaze intersection may be beneficial in assessing the trainee's attention to detail and focus in the training environment. The gaze intersect tracker 276 is further configured to recorded gaze intersections in a gaze intersect log.

The scene generator module 274 is further configured to generate a 3D visual behavior log 277 recording visual behavior metrics, for example, AOIs (dynamic or static) that are relevant for measuring visual behavior against, observation reaction time (the time to first eye fixation on an AOI when it is in the trainee's field of view), total number of fixations on an AOI, number of saccades on an AOI, gaze path(s) of visual attention, and other two-dimensional eye behavior metrics. The 3D visual behavior log 277 may include heat maps for presenting one or more of the above-listed visual behavior metrics. The visual behavior log 277 is stored in the database 252.

The replay server 250 includes a replay generator module 278. The subunits 279, 280 of the replay generator module 278 may implement machine learning and artificial intelligence trained to stitch/combine individual virtual scenes 292 in the correct temporal sequence to generate a 3D post-session replay 294. The replay generator 278 includes a session replay manager subunit 279. The session replay manager 279 is configured to generate a 3D post-session replay 294 of the training session from the virtual scenes 292. The replay manager 279 is further configured to control the training session replay, including the start, the stop, and pausing of the session replay. The replay manager 279 is further configured to snip or trim the session replay into smaller segments of interest.

The post session replay 294 may display or highlight the trainee's fixation point, gaze path, and AOI observation data (e.g., when and for how long an AOI was viewed) superimposed on the first-person view of the virtual scene.

The replay generator 278 includes a top view replay manager subunit 280. The top view replay manager 280 is configured to generate a top (bird's eye) view of the training session replay from the perspective of a virtual camera above the center of the virtual scene 292. The top view replay manger 280 is further configured to receive user input to change the position of the virtual camera, to rotate or translate the virtual scene 292 to provide different points of view of the 3D post session replay 294. The top view replay manger 280 is further configured to add the horizontal component of the trainee's gaze vector into the top view to show the direction of the trainee's gaze.

The replay generator 278 is further configured to generate a 3D visual behavior report 281, including AOI-related information, gaze tracking, 3D visual behavior heat maps, and scores based on the full data set collected during the training exercise such as a distraction score, and a spatial awareness score.

The replay server 250 hosts a session replay console application 282. The session replay console 282 is configured to generate an interface for presenting the 3D post session replay 294 and the outputs of the biomarker indicator processes 269. The interface generated by the session replay console 282 is mirrored to the client software 256.

The client software 256 is configured to receive user input for replay options and replay controls. For example, the client software 256 may present replay options for a first-person view or a bird's eye view of the post session replay. The client software 256 may present replay controls including, start, stop and pausing of the session replay 294.

The session replay console 282 is configured to import the virtual scenes 292, the 3D post session replay 294 and the outputs of the biomarker indicator processes 269 from the database 252 to generate an interface in response to a replay command from the client software 256.

The session replay console 282 is further configured to generate a behavior report 283. The behavior report 283 includes the same content as the behavior report 281 in addition to other psychophysiological scores including but not limited to a stress score, an alertness score, awareness scores, a fatigue score and a tunnel vision score.

The combined operation of the modules 270, 274, 278 allows for the replay server 250 to automatically superimpose/synchronize the bio twin of the trainee onto the virtual twin 290 of the training environment for gaze vector detection and corresponding AOI detection to generate the virtual scene 292 and 3D post-session replay 294 of the training session, and the 3D visual behavior report 281, relatively quickly on the order of minutes. Existing techniques that require a data analyst to manually identify AOIs in a recorded video of a training session, by frame-by-frame analysis, is very time consuming on the order of hours. The replay server 250 greatly reduces the delay between the capturing the performance of training activities in the training environment, and post-processing the biometric measurement data to extract indicators of the trainee performance of the training activities. Accordingly, by replacing the manual post-processing performed by a data analyst, the time needed for an after-action review of trainee performance is limited only by the replay server 250 processing time.

The third-party apps 264 include biomarker applications 266. Each biomarker application 266 is configured to process biometric data from a particular bio-wearable 210 and generate an output. For example, a biomarker application 266 may be configured to process a signal from an ECG electrode 214 to generate an output of heart rate (pulse).

The outputs from the biomarker apps 266 are fed into biomarker indicator processes 269 to generate biomarker analytics, psychophysiological analytics and after-action report analytics for the behavior reports 281, 283 that describe the trainee's psychophysiological behavior/response to conditions/stimuli in the training training environment. The outputs of the biomarker indicator processes 269 includes biometric scores that combines various biometric measurements to provide an overall indication of a trainee's psychophysiological behavior/response during training activities. The outputs of the biomarker indicator processes 269 are stored in the database 252.

According to an embodiment, the biomarker indicator processes 269 includes one or more algorithms that process biometric indicators of leadership, cooperation, situational awareness, decision making ability and communication effectiveness into a benchmarked metric or scores. Most scores are autogenerated via the biowearable data or AOI tracking data. An AOI object awareness score, for example, can be automatically applied to an object. If the trainee is carrying a map, there can be an AOI object awareness score based on the amount of visual attention that the AOI (the map) receives. In another example, a situational awareness score is based on gaze data or communication data about an object or group of objects.

According to other embodiments, some scores, such as a decision making score are assigned by a trainer at the end of a training session scoring time window, for example, assigning a score on a scale of 0 to 5 based on trainee performance or action in a time window set by the trainer.

The benchmark metric is used to rate or rank individual trainees from group of trainees to identify those trainees that are above the benchmark and well adapted to leadership roles. Alternatively, the individual trainee scores may be used to assess the relative individual leadership competency of each trainee.

According to other embodiments, the biomarker indicator processes 269 may include machine learning or artificial intelligence algorithms configured for processing biometric indicators of stress or other indicators of human behavior/response to generate various scores or indexes including, but not limited to: fatigue level, alertness level, awareness level, emotional arousal level, exertion level, tunnel vision, mental workload, body temperature level and respiration rate.

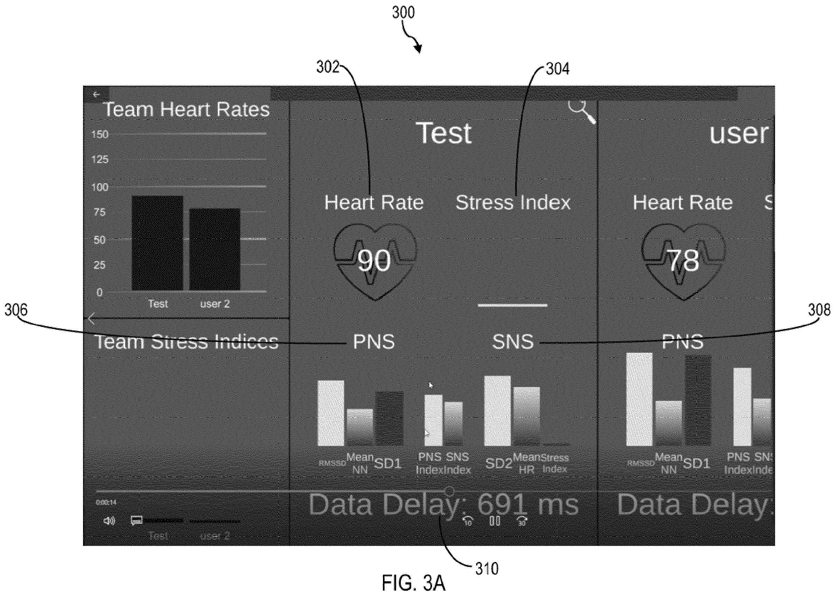

Referring to FIG. 3A shown therein is an exemplary live biometric data user interface 300, according to an embodiment. The user interface 300 is generated by the live action console application hosted by the live view server 220 and mirrored in the client software 226. The user interface 300 shows live biometric data for individual trainees or a team of trainees. As shown, the user interface 300 shows the biometric data of 2 individual trainees "test" and "user" side-by-side for easy direct comparison. The live biometric data includes a live heart rate 302, a stress index 304, a parasympathetic nervous system (PNS) index 306 and a sympathetic nervous system (SNS) index 308. The user interface 300 also displays a data time delay 310 from when the biometric heart rate data is recorded to when the data is processed, and the live heart rate presented on the user interface 300.

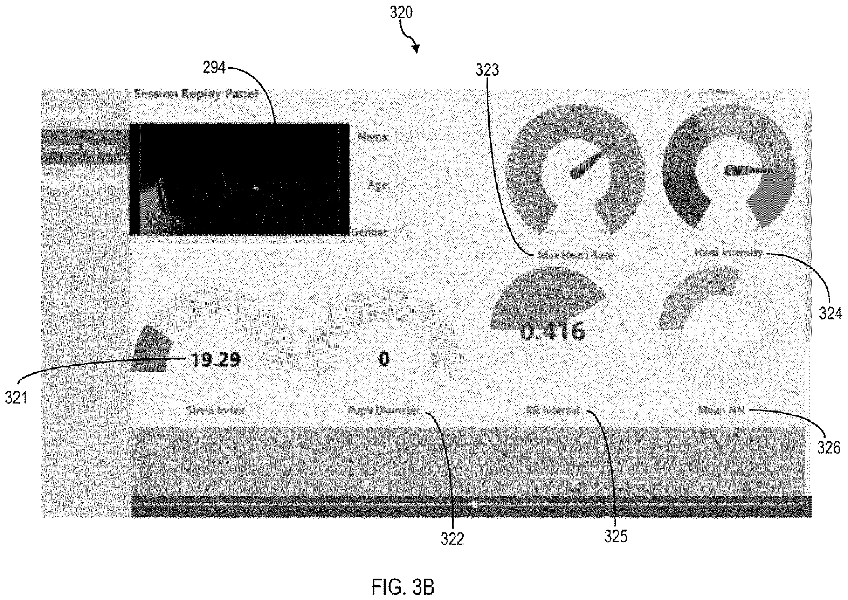

Referring to FIG. 3B, shown there is an exemplary post session replay user interface 320, according to an embodiment. The user interface 320 is generated by the session replay console application 283 hosted by the replay server 250 and mirrored in the client software 256. The user interface 320 shows the 3D post session replay 294 synchronized with various biometric indicators 321, 322, 323, 324, 325, 326 of the trainee's behavior/response. The biometric indicators include a stress index 321, a pupil diameter 322, a maximum heart rate 323, a hard intensity 324, a RR interval 325 and a mean NN 326.

The hard intensity 324 is a measure of exertion level calculated as percentage of heart rate relative to the heart rate maximum in classified exertion zones. The RR interval 325 is the beat-to-beat heart rate interval time i.e., the time interval between R spikes during the QRS complex (depolarization of ventricles) as seen in ECG data. The NN interval 326 is the normalized time interval between two detected heartbeats calculated for every QRS event.

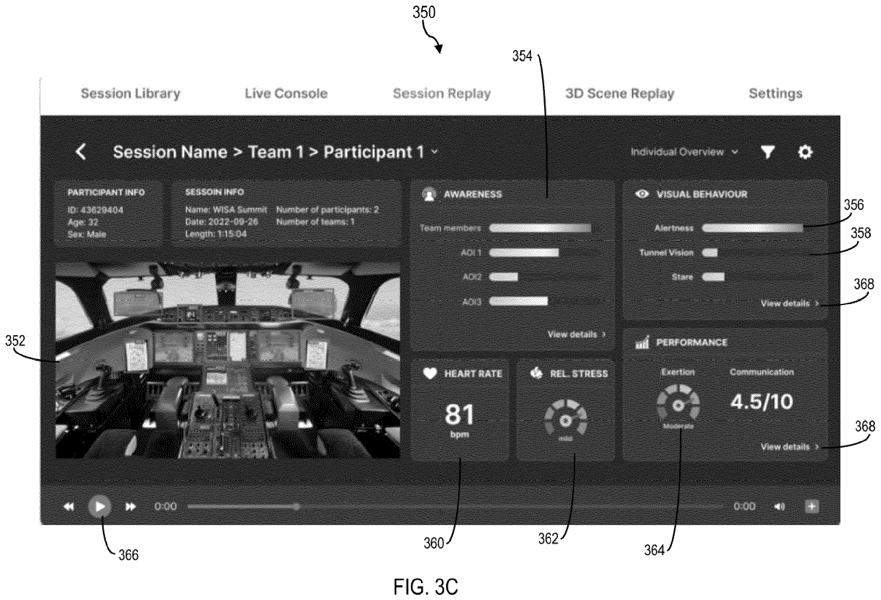

Referring to FIG. 3C, shown therein is an exemplary user interface 350 of the session replay console application 283, according to another embodiment. The user interface 350 shows a post session replay 352 synchronized with various biometric indicators 354, 356, 358, 360, 362, 364 of the trainee's psychophysiological behavior/response. The biometric indicators include awareness levels 354 based on the trainee's attention to AOIs or other stimuli in the training environment. Other biometric indicators include alertness level 356, tunnel vision 358, heart rate 360, stress level 362 and performance indicators 364. The user interface 350 further includes user-selectable options 368 to display a behavior report 283 for certain biometric indicators. The user interface 350 further includes replay controls 356 to start, pause, fast forward and rewind the replay session.

The systems and methods described here may be particularly useful for training a group (or team) of trainees and evaluating each individual trainee's competency from the training session replay and biometric indicators of trainee behavior/response extracted from the training session. A non-limiting example of an implementation of the systems and methods is described below.

In training a team of trainees it is desirable to compare each trainee's training performance to their peers to assess whether the trainee displays a requisite level of competency in performing training activities. It is also desirable to assess whether a given trainee may be particularly suited for a leadership role based on their biometric responses when performing training activities.

Prior to training, the scanner 202 is used to create a virtual mesh 204 of a training environment the trainees will use. The virtual mesh 204 is edited to create a virtual twin 290 of the environment including assigned static and dynamic objects and areas of interest. Prior to the training session, each trainee is attached with bio-wearables 210 to capture the first-person view, movements and biometric indicators of the trainee's behavior/response as they move around the training environment.

During the training session, biometric data from the bio-wearables 210 are recorded to a local device 206 carried by each trainee. After the training session, the biometric data is retrieved from the local device 206 and analyzed by 3^{rd} party apps 264 and one or more biomarker indicator processes 269 to extract biometric indicators of behavior/response.

After the training session, the replay server 250 synchronizes the position of objects in the virtual twin 290 of the training environment, with the gaze vector tracker output and the view recorded by the camera 211 to generate a virtual scene 292 for each camera 211 frame captured during the training session. The replay server 250 then generates a post training session replay 294 for each soldier. As described above, the post session replay 294 may display the trainee's fixation point, gaze path, and AOI observation data superimposed on the first-person view of the virtual scene temporally synchronized with biometric indicators extracted from the biometric data analysis. The post session replays 296 can be viewed by a trainer to compare one trainee's competency and biometric responses to another.

While the above description provides examples of one or more apparatus, methods, or systems, it will be appreciated that other apparatus, methods, or systems may be within the scope of the claims as interpreted by one of skill in the art.

In another aspect of the invention, there is provided a system for training session replay, comprising: a scanner device for capturing a three-dimensional view of a training environment to generate a virtual mesh of the environment; a plurality of wearable devices for wearing by a trainee for measuring biometric data of the trainee and capturing a first-person perspective of a training session in the training environment, the wearable devices including at least eye track glasses, a camera, a microphone and inertial measurement units; a local device configured to receive, store and relay the biometric data and the first-person perspective; and a replay server comprising: a memory for storing processor-executable instructions; and a processor coupled to the memory, wherein upon execution of the instructions by the processor, the replay server is configured to: receive the virtual mesh from the scanner device; receive the biometric data and the first-person perspective from the local device; automatically analyze the biometric data to extract psychophysiometric insights and indicators of the trainee's behavioral response to areas of interest or stimuli in the training environment; and generate a post-session replay of the training session temporally synchronized with the psychophysiometric insights and indicators.

In another aspect of the invention, there is provided a system for training session replay, comprising: a plurality of wearable devices for wearing by a trainee for measuring biometric data of the trainee and capturing a first-person perspective of a training session in a training environment, the wearable devices including at least eye track glasses, a camera and a microphone; a local device configured to receive, store and relay the biometric data and the first-person perspective; and a live view server comprising: a memory for storing processor-executable instructions; and a processor coupled to the memory, wherein upon execution of the instructions by the processor, the live view server is configured to: receive the biometric data and the first-person perspective from the local device over a wireless network; generate a live replay of the training session showing the first-person perspective of the training session temporally synchronized with the biometric data.

The live view server can be further configured to: host a live action console application for presenting the live replay of the training session in near real-time to a user. The wearable devices can further include one or more of: a global positioning system tracker, inertial measurement units, a heart rate monitor, a galvanic skin response monitor, a transducer (respiration) belt, a body temperature sensor, an electromyograph electrode, an electroencephalograph electrode and a full-body motion capture system.

## Claims

1. A system (200) for training session replay, comprising:
a plurality of wearable devices (210) for wearing by a trainee for measuring biometric data of the trainee and capturing a first-person perspective of a training session in a training environment, the wearable devices including at least eye track glasses, a camera (211) and a microphone;
a local device (206) configured to receive, store and relay the biometric data and the first-person perspective; and
a server comprising:
a memory for storing processor-executable instructions; and
a processor coupled to the memory, wherein upon execution of the instructions by the processor, the server is configured to:
receive the biometric data and the first-person perspective from the local device (206);
generate a replay of the training session temporally synchronized with the biometric data.

2. The system of claim 1, wherein the system provides a replay view of a training session and the system further comprises:
a scanner device (202) for capturing a three-dimensional view of a training environment to generate a virtual mesh (204) of the environment;
the wearable devices (210) further include inertial measurement units;
the server comprises a replay server (250) which is configured to receive the virtual mesh (204) from the scanner device and is configured to:
automatically analyze the biometric data to extract psychophysiometric insights and indicators of the trainee's behavioral response to areas of interest or stimuli in the training environment; and
generate a post-session replay of the training session temporally synchronized with the psychophysiometric insights and indicators.

3. The system of claim 2, wherein the replay server is (250) further configured to:
host a session replay console application for presenting the post session replay to a user.

4. The system of claim 2, wherein the virtual mesh (204) comprises points in space, polygons or vectors representing objects and boundaries in the training environment and wherein the replay server (250) can be further configured to:
extract two-dimensional gaze tracking videos, gaze vector data, and visual behavior data from the biometric data measured by the eye track glasses;
estimate a head pose and a head position of the trainee from the two-dimensional gaze tracking videos, the gaze vector data, and the visual behavior data;
estimate a body position of the trainee from the biometric data measured by the inertial measurement units; and
generate a bio twin of the trainee based on the head pose, the head position and the body position of the trainee,
wherein the pose and the position of the static objects and the dynamic objects in the post-session replay can be temporally synchronized with the head pose and the head position of the trainee, whereby the pose and the position of the static objects and the dynamic objects in the post-session replay can be temporally synchronized with the head pose and the head position of the trainee.

5. The system of claim 2, wherein the replay server (250) is further configured to:
host a mesh editor application (260) configured for editing, smoothing, segmenting and stitching the virtual mesh (204) to eliminate gaps and/or incongruities and wherein the replay server can be configured to: generate a virtual scene of the bio twin of the trainee within the virtual twin of the training environment for each video frame captured by the camera during the training session.

6. The system of claim 2, wherein the replay server (250) is further configured to:
generate a virtual twin (290) of the training environment from the virtual mesh, the virtual twin (290) including static objects and dynamic objects in the training environment; and
receive user input to label one or more of the static objects and/or the dynamic objects as an area of interest (AOI) and wherein the replay server can be further configured to: generate a post-session replay of the training session from a plurality of virtual scenes showing the first-person perspective of the training session.

7. The system of claim 6, wherein the replay server (250) is further configured to:
receive user input to position a virtual camera within the virtual scene; and generate the post-session replay of the training session from a perspective of the virtual camera.

8. The system of claim 4, wherein the body position and movements of the bio twin of the trainee in the post-session replay are temporally synchronized to movements made by the trainee during the training session.

9. The system of claim 6, wherein the replay server (250) is further configured to:
determine where a gaze vector of the trainee intersects with the AOI; and record AOI observation data in a log, including an observation reaction time, a total number of fixations on the AOI, number of saccades on the AOI and gaze path(s) of visual attention.

10. The system of claim 8, wherein the replay server (250) is further configured to:
generate the post-session replay of the training session from a plurality of virtual scenes showing the first-person perspective of the training session; and
display the AOI observation data superimposed on the first-person perspective.

11. The system of claim 2, wherein the replay server (250) is further configured to generate a behavior report including the biometric and psychometric insights and indicators.

12. The system of claim 2, wherein the replay server (250) is further configured to implement one or more algorithms for processing the biometric data to generate the psychophysiometric insights and indicators of the trainee's behavioral response as a benchmarked metric or score.

13. The system of claim 1, wherein the system provides a live view of a training session:
Wherein the server is a live view server (220);
Wherein the biometric data and the first-person perspective from the local device (206) is received over a wireless network;
Wherein a live replay of the training session can be generated showing the first-person perspective of the training session temporally synchronized with the biometric data.

14. The system of claim 14, wherein the live view server (220) is further configured to:
host a live action console application for presenting the live replay of the training session in near real-time to a user.

15. The system of any one of claims 1 - 14, wherein the wearable devices (210) further include one or more of: a global positioning system tracker, a heart rate monitor, a galvanic skin response monitor, a transducer (respiration) belt, a body temperature sensor, an electromyograph electrode, an electroencephalograph electrode and a full-body motion capture system.
